# EUROPEAN PATENT SPECIFICATION

(11) **EP 2 701 529 B1**
(45) Date of publication and mention of the grant of the patent: **01.08.2018**
(21) Application number: 12719038.7
(22) Date of filing: 25.04.2012
(51) Int. Cl.: A23G 1/00, A23G 1/32

(54) **TEMPERATURE TOLERANT CHOCOLATE**
TEMPERATURTOLERANTE SCHOKOLADE
CHOCOLAT TOLÉRANT À LA TEMPÉRATURE

(30) Priority: 27.04.2011 GB 201106991
(43) Date of publication of application: 05.03.2014
(73) Proprietor: Cadbury UK Limited, Birmingham B30 2LU (GB)
(72) Inventor: SILVANO, Daniela, Uxbridge, Middlesex UB8 1DH (GB); DHAMI, Rajesh, Uxbridge, Middlesex UB8 1DH (GB)
(74) Representative: Appleyard Lees IP LLP
(86) International application number: PCT/GB2012/050907
(87) International publication number: WO 2012/146920

(56) References cited:
- EP-A1- 1 673 977
- US-A- 3 218 174
- US-A- 5 149 560
- US-A- 5 232 734
- US-B1- 6 221 422

## Description

The present invention relates to temperature tolerant chocolate, particularly temperature tolerant chocolate comprising unconched chocolate ingredients and conched chocolate. The invention further relates to processes for the manufacture of temperature tolerant chocolate comprising unconched chocolate ingredients and conched chocolate.

Development of a temperature tolerant chocolate (TTC) format represents a huge opportunity for the food and confectionary industry that has impact across a range of categories including chocolate, biscuit and snacks. Chocolate and biscuit-type snack products are sensitive to changes and extremes of temperatures such that their quality deteriorates dramatically unless conditions are well controlled. Production of temperature tolerant chocolate would allow production of chocolate-containing product more suitable for hot climates, particularly in less economically developed countries where the supply chain is ill-equipped to handle significant temperature / humidity fluctuations and where product quality is compromised.

US3218174 discloses a process for preparing a heat resistant chocolate product. US6221422 discloses a process for preparing chocolate.

Thus, according to a first aspect of the invention there is provided a process for preparing a chocolate product comprising:
(a) providing unconched chocolate ingredients; and
(b) mixing said unconched chocolate ingredients with conched chocolate to form a chocolate product; and
optionally moulding said chocolate product; and
characterised in that the unconched chocolate ingredients comprise fat and one or more sweeteners and one or more components selected from milk and cocoa liquor; and in that the conched chocolate is added in the range of 10% to 35% (w/w) of the unconched chocolate ingredients and conched chocolate mixture; and in that the method comprises preparing a chocolate product having an average particle size of less than 80µm and having a percentage total fat in the range of 20% to 35%.

In a further embodiment of the invention there is provided a process for preparing a chocolate product comprising:
(a) providing unconched chocolate ingredients;
(b) refining said unconched chocolate ingredients, and
(c) mixing said unconched chocolate ingredients with conched chocolate to form a chocolate product, wherein the conched chocolate is added in the range of 10% to 35% (w/w) of the unconched chocolate ingredients and conched chocolate mixture; and
optionally moulding said chocolate product.

The term 'chocolate ingredients' comprises fat and one or more sweeteners and one or more components selected from milk and cocoa liquor (otherwise known as cocoa mass). In one embodiment 'chocolate ingredients' comprises milk, one or more sweeteners, cocoa liquor and fat. In another embodiment 'chocolate ingredients comprises one or more sweeteners, cocoa liquor and fat. In a further embodiment 'chocolate ingredients' comprises milk, one or more sweeteners and fat. The term 'chocolate ingredients' further comprises chocolate ingredients where some or all of the cocoa liquor is replaced by cocoa powder.

Milk can be provided in any suitable form, such as liquid milk, condensed milk, evaporated milk or milk solids (powder or granules) such as whole milk powder, whey proteins or low fat milk solids or any mixture of these milk forms.

Suitable sweeteners include sugars (e.g. sucrose, dextrose, glucose syrup solids, fructose, lactose, maltose or any combination thereof), sugar alcohols (e.g. erythritol, sorbitol, xylitol, mannitol, lactitol, isomalt, or any combination thereof), intense sweeteners (e.g. aspartame, acesulfame-k, cyclamates, saccharin, sucralose, neohesperidin, dihydrochalone, alitame, stena sweeteners, glycyrrhizin or any combination thereof) and any combination of sugars, sugar alcohols and intense sweeteners. In one embodiment of the invention the sweetener comprises sucrose. In a further embodiment the sweetener is sucrose.

Sweeteners may be provided as a separate component in the chocolate ingredients and/or comprise part of one of the other ingredients, for example, lactose as a component of milk. In one embodiment of the invention the sweetener comprises sucrose and lactose as a constituent of the milk component. In a further embodiment the sweetener consists of sucrose and lactose as a constituent of the milk component.

Sugar can be provided in an amorphous or crystalline form. In some embodiments all the sugar is amorphous, in others all the sugar is crystalline. In other embodiments the sugar is a mixture of amorphous and crystalline sugar. For example, in one embodiment more than 50% of the sugar is amorphous, whilst in other embodiments less than 50% of the sugar is amorphous. In general less than 50% of the sugar is amorphous, for example, less than 45% such as less than 40%, less than 25%, less than 30%, less than 25%., less than 20%, less than 15% or less than 10%. The sugar may comprise one saccharides e.g. sucrose or a mixture of saccharides for example a mixture of sucrose and lactose. Where there is a mixture of saccharides each saccharide may have is own degree of crystallinity. For example, where the sugar is a mixture of sucrose and lactose, the sucrose may be predominantly crystalline (for example >95% crystalline) and the lactose predominantly crystalline (>95% crystalline) or the lactose predominantly amorphous (>95% amorphous).

The milk, one or more sweeteners and cocoa liquor and/or cocoa mass can be provided as a chocolate crumb. Chocolate crumb comprises milk to which is added one or more sweeteners and cocoa liquor, followed by drying. Chocolate crumb provides some of the chocolate ingredients as a convenient intermediate in chocolate making with an increased shelf life. Chocolate crumb would be familiar to the skilled man and a number of processes are available for it's manufacture. For example, sweetened condensed milk is mixed with cocoa liquor and dried to form crumb. The skilled man would be familiar with different types of crumb for example, with different crystallinties and different fat contents. Such crumbs would be suitable as a source of chocolate ingredients for chocolate products of the invention. For further information a number of standard texts are available to the skilled man, for example, Chocolate, Cocoa and Confectionary, 3rd Edition, 1999, Author: Minifie, BW, Publisher: Aspen, Gaithersburg, Maryland, USA.

Suitable fats for use in the chocolate ingredient comprise cocoa butter, butterfat, a cocoa butter equivalent (CBE), a cocoa butter substitute (CBS) (sometimes known as a cocoa butter replacer, CBR), a vegetable fat that is liquid at standard ambient temperature and pressure (SATP, 25°C. and 100 kPa), a wholly non-metabolisable fat or any combination of the above. In one embodiment the fat is cocoa butter. In one embodiment the cocoa butter is derived from one source whilst in a further embodiment the cocoa butter is a blend of cocoa butters from a number of sources, so called 'butter blend'.

CBE's are defined in European Directive 2000/36/EC as complying with the following criteria:
a) they are non-lauric vegetable fats, which are rich in symmetrical monounsaturated triglycerides of the type POP (dipalmitoyl-2-oleoyl glycerol), POSt (1-palmitoyl-2-oleoyl-3-palmitoyl-glycerol) and StOSt (distearoyl-2-oleoyl glycerol);
b) they are miscible in any proportion with cocoa butter, and are compatible with its physical properties (melting point and crystallisation temperature, melting rate, need for tempering phase);
c) they are obtained only by the processes of refining and/or fractionation, which excludes enzymatic modification of the triglyceride structure.

Suitable CBE's include illipe, Borneo tallow, tengkawang, palm oil, sal, shea, kokumgurgi and mango kernel. CBE's are preferably used in combination with cocoa butter. The chocolate composition preferably comprises no more than 5 wt % CBE's.

Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS non-laurics include soya, cotton seed, peanut, rapeseed and corn (maize) oil.

The chocolate ingredients may comprise a cocoa butter substitute (CBS) in place of some or all of the cocoa butter.

Suitable vegetable fats include corn oil, cotton seed oil, rapeseed oil, palm oil, safflower oil, and sunflower oil. A liquid vegetable fat may be employed when a liquid chocolate composition is desired
Suitable partly or wholly non-metabolisable fats include Caprenin.

The term 'conched chocolate' refers to any finished chocolate product. A finished chocolate product comprises a suspension of very fine particles (generally in the range 0.5µM to 80µM, for example less than 30µM) coated in fat. The particles may comprise cocoa solids and sweetener and in the case of milk chocolate, milk solids. The methodology for the formulation of the finished chocolate comprises refining to reduce particle size and conching. Conching would be familiar to the skilled man (being generally a process in which solids are coated with fat, moisture content is lowered and volatile or unwanted flavours removed), for more information the reader is referred to Chocolate, Cocoa and Confectionary, 3rd Edition, 1999, Author: Minifie, BW, Publisher: Aspen, Gaithersburg, Maryland, USA. Examples of conched chocolate include any commercially available chocolate, for example Cadbury Dairy Milk™, Mars Galaxy™, Nestle Yorkie™, etc) For the avoidance of doubt conched chocolate includes tempered chocolate.

The chocolate ingredients can be provided in any suitable form for mixing with the conched chocolate. For example:
(a) chocolate crumb, pasted with fat;
(b) milk, one or more sweeteners and cocoa liquor or cocoa powder pasted with fat;
(c) one or more sweeteners and cocoa liquor or cocoa powder pasted with fat;
(d) milk and one or more sweeteners pasted with fat;
(e) milk powder or granules, one or more sweeteners and cocoa liquor or cocoa powder, pasted with fat;
(f) milk powder or granules and one or more sweeteners pasted with fat;
(g) sweetened condensed milk and cocoa liquor or cocoa powder, pasted with fat;
(h) sweetened condensed milk pasted with fat; or
(i) chocolate crumb and powdered milk, sugar and cocoa liquor and/or cocoa powder pasted with fat.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form an unconched paste;
(b) refining said unconched paste;
(c) mixing said unconched paste with conched chocolate to form a chocolate product; wherein the conched chocolate is added in the range of 10% to 35% (w/w) of the unconched chocolate ingredients and conched chocolate mixture,
optionally moulding said chocolate product.

The term 'starting ingredients' refers to chocolate ingredients without the added fat. For example, starting ingredients include:
(i) chocolate crumb;
(ii) cocoa liquor or cocoa powder, milk and one or more sweeteners
(iii) cocoa liquor or cocoa powder, milk powder or granules and one or more sweeteners;
(iv) milk and one or more sweeteners;
(v) sweetened condensed milk;
(vi) milk powder or granules and one or more sweeteners; or
(vii) cocoa liquor or cocoa powder and one or more sweeteners;

In some embodiments the chocolate ingredients and conched chocolate are mixed prior to refining and a refining step added after mixing of the chocolate ingredients and conched chocolate. Therefore, there may be provided a process for preparing a chocolate product comprising:
(a) providing unconched chocolate ingredients;
(b) mixing said unconched chocolate ingredients with conched chocolate to form a chocolate product, wherein the conched chocolate is added in the range of 10% to 35% (w/w) of the unconched chocolate ingredients and conched chocolate mixture;
(c) refining the mixture of chocolate ingredients and conched chocolate, and optionally moulding said chocolate product.

According to a further embodiment of the invention there is provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
(b) mixing said unconched paste with conched chocolate to form a chocolate product; wherein the conched chocolate is added in the range of 10% to 35% (w/w) of the unconched chocolate ingredients and conched chocolate mixture,
(c) refining said chocolate product, and
optionally moulding said chocolate product.

In some embodiments the chocolate ingredients are provided in a refined state and a further refining step is added after mixing the chocolate ingredients and the conched chocolate. Therefore, there may be provided a process for preparing a chocolate product comprising:
(a) providing unconched chocolate ingredients wherein one of more of the chocolate ingredients are refined;
(b) mixing said unconched chocolate ingredients with conched chocolate, wherein the conched chocolate is added in the range of 10% to 35% (w/w) of the unconched chocolate ingredients and conched chocolate mixture;
(c) refining the mixture of chocolate ingredients and conched chocolate, and
optionally moulding said chocolate product.

There may be provided a process for preparing a chocolate product comprising:
(a) providing unconched chocolate ingredients wherein the chocolate ingredients have an average particle size of less than 80µM;
(b) mixing said unconched chocolate ingredients with conched chocolate, wherein the conched chocolate is added in the range of 10% to 35% (w/w) of the unconched chocolate ingredients and conched chocolate mixture;
(c) refining the mixture of chocolate ingredients and conched chocolate, and
optionally moulding said chocolate product.

There may be provided a process for preparing a chocolate product comprising:
(a) providing unconched chocolate ingredients wherein the chocolate ingredients have an average particle size of less than 80µM;
(b) mixing said unconched chocolate ingredients with conched chocolate;
(c) refining the mixture of chocolate ingredients and conched chocolate, and
optionally moulding said chocolate product.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
   (iii) refining said paste, for example to a particle size of less than 80µm;
(b) mixing said unconched paste with conched chocolate to form a chocolate product, wherein the conched chocolate is added in the range of 10% to 35% (w/w) of the unconched chocolate ingredients and conched chocolate mixture;
(c) refining said chocolate product, and
optionally moulding said chocolate product.

There may be provided a process for preparing a chocolate product, comprising:
(a) preparing an unconched paste by a process comprising the steps of:
   (i) providing starting ingredients, for example chocolate crumb;
   (ii) pasting said starting ingredients with a fat to form a paste;
   (iii) refining said paste, for example to a particle size of less than 80µm;
(b) mixing said unconched paste with conched chocolate to form a chocolate product;
(c) refining said chocolate product, and
optionally moulding said chocolate product.

The term 'refining', and derivatives thereof, such as refined, refers to the process of reduction in the particle size of chocolate ingredients. A number of processes are available for refining to reduce particle size, for example roll refining.

Improvements in the temperature tolerance of the chocolate product were also observed by varying the mixing conditions of the components. The paste properties and the resulting temperature tolerant properties can be modified by a combination of mixing times and mixing speeds. Therefore, in one embodiment there is provided a process of the invention wherein the chocolate ingredients and the conched chocolate are mixed in a 10kg Hobart mixer for about 30 second to about 1 minute 30 seconds at a Hobart speed of 1, 2 or 3.

In one embodiment mixing was conducted under the following conditions:
(a) a speed between about 100rpm and about 205 rpm, for example about 113 rpm or about 205 rpm.
(b) a time between about 30 seconds and about 1 minute 30 seconds, for example between 30 seconds and about 60 seconds, for example between about 30 seconds to about 45 seconds, such as about 30 seconds; or about 45 seconds and
(c) using a suitable mixing attachment such as aluminium open paddle (B Flat beater) or equivalent mixing attachment;
in a suitable mixer, such as a Hobart Model A200N mixer.

At high mixing speeds and high mixing times, the resulting paste was more akin to standard chocolate and exhibited reduced temperature tolerant properties. This is believed to be due to the increased coating of particles by fat under progressively higher mixing conditions thus limiting sugar-sugar interactions hypothesized to be responsible for the temperature tolerant effect. This observation applies for systems where the component ingredients have been well mixed. Below a certain threshold of low mixing speeds and short times lower temperature tolerance was observed, for example, at the lowest speed setting and a mixing time of 30 s. This is attributed to insufficient mixing of the ingredients at times of 30 s and not due to reduced sugar-sugar interaction.

In some embodiments an emulsifier is added during the process, for example when mixing the chocolate ingredients with the conched chocolate. In a further embodiment no emulsifier is added during preparation of the chocolate product, although some emulsifier may be present in the conched chocolate added during the process.

Suitable emulsifiers include lecithin derived from soya bean, safflower, sunflower, corn etc., fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium phosphatides, polyglycerolpolyricinoleate (PGPR), lactylated fatty acid esters of glycerol and propylene glycol, polyglycerol esters of fatty acids, citric acid esters of fatty acids, propylene glycol mono- and diesters of fats and fatty acids. In one embodiment the emulsifier is soya lecithin, for example soya lecithin SN100, for example added when mixing the chocolate ingredients with the conched chocolate. In a further embodiment the emulsifier comprises a mixture of soya lecithin and polyglycerolpolyricinoleate. (PGPR).

In processes of the invention, in general, there is no further conching step after the mixing of the unconched chocolate ingredients and the conched chocolate. In a further embodiment of the invention there is provided a process of the invention wherein after the mixing of the unconched chocolate ingredients and the conched chocolate there is no further conching.

According to a second aspect of the invention there is provided a chocolate product comprising a mixture of: unconched chocolate ingredients and a conched chocolate; characterised in that the unconched chocolate ingredients comprise fat and one or more sweeteners and one or more components selected from milk and cocoa liquor; and in that the conched chocolate is present in the range of 10% to 35% (w/w) of the chocolate product; and in that the chocolate product has an average particle size of less than 80µm and a percentage total fat in the range of 20% to 35%.

There may be provided a chocolate product comprising a mixture of a chocolate crumb, fat and a conched chocolate wherein the conched chocolate is present in the range of 10% to 35% (w/w) of the chocolate product.

There may be provided a chocolate product of the invention further comprising an emulsifier.

In one embodiment the emulsifier content is less than 1% (w/w), for example less than about 0.8% (w/w) such as less than about 0.7%, about 0.6%, about 0.5%, about 04%, about 0.3%, about 0.2% or about 0.1% (w/w). In one embodiment the chocolate product contain no emulsifier or a minimal level such as less than about 0.05% emulsifier.

The amount of conched chocolate added to the chocolate ingredients provides a balance between temperature tolerance and ensuring a pleasant chocolate taste whilst ensuring a fat discontinuous system. It is believed that temperature tolerance is enhanced by having fewer fully fat coated sugar particles leading to a more sugar continuous system whilst maintaining some fat coated sugar particles to contribute to a pleasing chocolate taste. In further embodiments, the conched chocolate is added at less than 35% (w/w), less than 30% (w/w), less than 25% (w/w), less than 20% (w/w), less than 15% (w/w) of the chocolate ingredients and conched chocolate mixture.

In further embodiments, the conched chocolate is added in the range 10-30% (w/w), 15-25% (w/w) of the chocolate ingredients and conched chocolate mixture. In further embodiments, the conched chocolate is added in the range 10% to about 30% (w/w), about 15% to about 30% (w/w), about 20% to about 30% (w/w), about 15% to about 25% (w/w) or 10% to about 20% of the chocolate ingredients and conched chocolate mixture.

The term 'about' when used in this specification unless otherwise defined refers to a tolerance ±2%, of the stated value, i.e. about 47% encompasses any value in the range 45% to 49%. In further embodiments 'about' refers to a tolerance of ±1%,, ±0.5%, ±0.2% or 0.1% of the stated value

Temperature tolerance of chocolate can be measured by measuring the hardness at an elevated temperature, for example using a TA.XTPlus Texture Analyzer using a 12.8mm cylindrical probe programmed to penetrate the sample to a depth of 3mm at a speed of 0.5mm/second (Stable Micro Systems Ltd., Godalming, Surrey, UK.) after incubating the chocolate product at 40°C for 3 hours prior to analysis. In this assay non-temperature tolerant chocolate would have a hardness of approximately 25-50g. In this assay, temperature tolerant chocolate products of the invention have a hardness of at least 200g. In other embodiments, in this assay temperature tolerant chocolate products of the invention have a hardness of at least 500g, at least 750g, at least 1000g, at least 1250g, at least 1500g, at least 1750g, at least 2000g, at least 2250g or at least 2500g.

The percentage of total fat in the chocolate product was found to affect the temperature tolerance of the chocolate product. Therefore, in one embodiment the percentage total fat in the chocolate product is less than 35%, for example in the range 20% to 35%, In an alternative embodiment in the range about 25% to 35%, about 28% to about 33%, about 29% to about 32%, or 20% to about 25% The total fat is a combination of the fat derived from milk, where present, and the fat derived from the cocoa butter. In one embodiment the percentage of fat derived from the milk is about 0% to about 8%, for example, about 4% to about 7%, such as about 4.5% to 6.5%, In one embodiment the percentage fat derived from the cocoa butter is less that about 30%, for example in the range about 15% to about 30%, such as about 20% to about 30%. In a further embodiment the total fat in the chocolate product is at least 18%, for example at least 20% or at least 22% (w/w).

The particle size in the chocolate product was found to affect the temperature tolerance of the product. Therefore, in one embodiment the average particle size is no more than 80µm, 75µm, 70µm or 65µm. In some embodiments, the average particle size is at least 20µm, 25µm or 30µm. In some embodiments, the average particle size is in the range 25 to 65µm. In a further embodiment there average particle size is in the range 30 to 50µm or in the range 20 to 30µm.

Particle size can also be expressed as D84 or D90 values. D84 relates to the maximum particle size of 84% of the particles and D90 relates to the maximum particle size of 90% of the particles. In one embodiment the particles have a D84 value in the approximate range or 22 to 44 µm, with corresponding D90 values of 30 to 50µm.

In general lower fat contents and lower particle sizes gave best temperature tolerance. However, it was also found that the effects of particle size and percentage fat on the temperature tolerance are related such that a higher particle size in combination with a lower fat content gave a good temperature tolerance and a lower particle size in combination with a higher fat content gave a good temperature tolerance.

The invention is now exemplified with reference to the following non-limiting examples, with reference to the following figures:

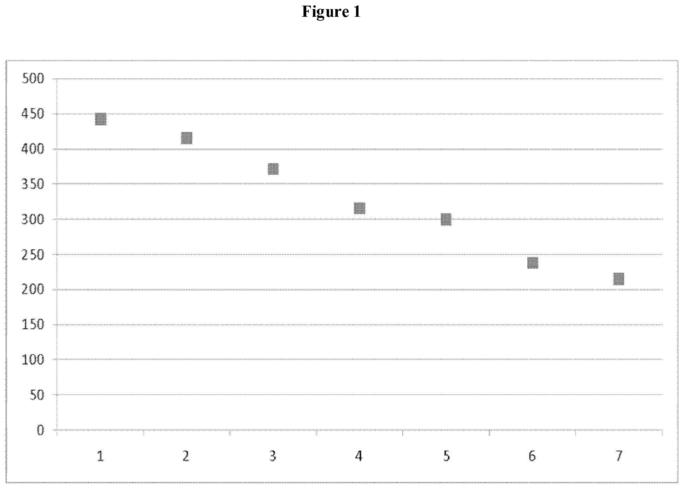

Figures 1: A graph showing the hardness (as measured by penetration force) of tablets (11mm diameter prepared on a RIVA Mini Press of samples with 29.1% fat either alone or mixed with different ratios of conched chocolate. The y axis shows the penetration force in grams and the x axis shows the different samples as follows:
   (1) 100% refiner flake;
   (2) 100% refiner flake;
   (3) 95: 5 refiner flake: conched chocolate;
   (4) 95: 5 refiner flake: conched chocolate;
   (5) 90: 10 refiner flake: conched chocolate;
   (6) 90: 10 refiner flake: conched chocolate; and
   (7) 80: 20 refiner flake: conched chocolate.

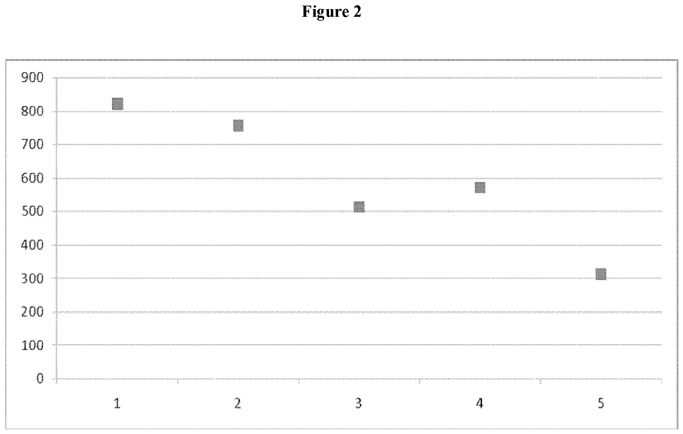

Figures 2: A graph showing the hardness (as measured by penetration force) of tablets (11mm diameter prepared on a RIVA Mini Press of samples with 31.1 % fat mixed with conched chocolate at a ratio of refiner flake : conched chocolate 83:17. The y axis shows the penetration force in grams and the x axis refers to different samples. Samples were re-refined to different particle sizes as follows:
   (1) 12:20 (lowest particle size distribution);
   (2) 12:20 (lowest particle size distribution),
   (3) 12:30 (medium particle size distribution)
   (4) 12:30 (medium particle size distribution); and
   (5) 12:40 (largest particle size distribution)

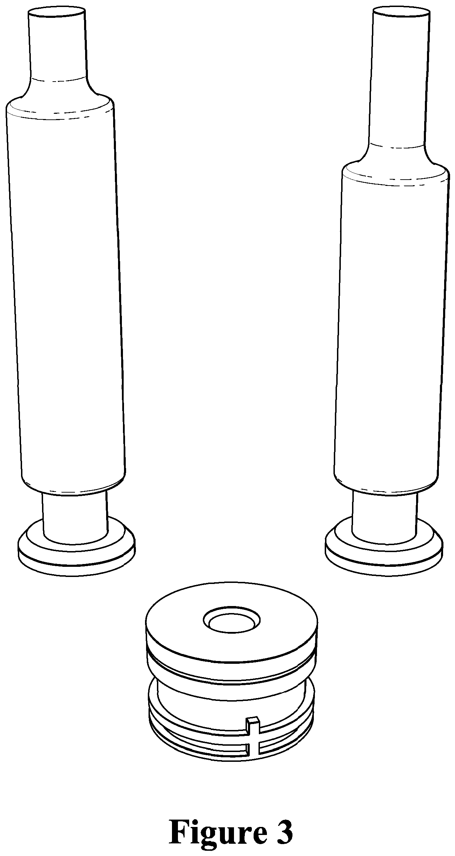

Figure 3 shows a 'top' punch (with short narrow section), 'bottom' punch (with long narrow section) and die piece from a Manesty rotary tableting machine

### Example 1

### Preparation of Temperature-tolerant chocolate

Pin-milled crumb (fat content 14.7% w/w) was first pasted with fat (B1). The resulting paste was then refined using a three roll refiner. Once the desired refiner flake particle size was attained, the refiner flake was then re-pasted using tempered conched chocolate (B2). The subsequent paste was then processed by hand into moulds.

10 kg Hobart mixers (Model A200N) with bowl and aluminium open paddle (B Flat beater) were used for mixing the first paste (referred to as B1) and the second paste (referred to as B2). The mixer was operated at speed 1, 2 or 3 as follows:
Speed 1 - about 61 rpm;
Speed 2 - about 113 rpm; and
Speed 3 - about 205 rpm
When used with respect to mixing speeds the term about means +/- 10%, i.e. about 100 rpm means between 90 rpm and 110 rpm.

A blend of cocoa butters was used (Butter Blend) as the fat in B1. A conched chocolate with an average particle size value (D90) of 24µM was used as the conched and tempered chocolate for the second pasting stage. Soya Lecithin SN100 (Paalsgaard, Juelsminde, Denmark) was used as the emulsifier for the purposes of this study.

The recipe detailed in Table 1 was used as the basis for preparing the first paste, B1. In order to deliver the required variation in fat content, adjustments were made by directly increasing or decreasing the contribution from the butter blend.

All B1 pastes were mixed for a total period of 2 minutes at a Hobart speed of 1 at a temperature of 45(±1) °C.

**Table 1. A summary of the standard recipe at B1**

| **Ingredient** | **% (w/w)** |
|---|---|
| Crumb | 82 |
| Butter Blend | 18 |

The pastes were refined using a Buhler 3 roll refiner (Model SDY DIVERS) The refiner flake was then pasted immediately into the second paste, B2. The recipe detailed in Table 2 was used as the basis for preparing B2. Where relevant, the mass of added chocolate was adjusted to account for the usage of the emulsifier Soya Lecithin (SN). 0.25 % SN (not taking into account the contribution of SN100 from the conched Tempered Chocolate) was added in the second pasting stage to produce B2.

B2 pastes were mixed for a period varying between 30 s and 90 s at a Hobart speed of 2 or 3 and a temperature of 35(±1) °C.

**Table 2. A summary of the standard recipe at B2**

| **Ingredient** | **% (w/w)** |
|---|---|
| Refiner Flake (B1) | 83 |
| Tempered Chocolate (B2) | 17 |

The resulting B2 pastes, and where relevant B1 pastes, were hand moulded and roll-pinned. Hand moulding was performed immediately by a minimum of two users into a minimum of 5 100 g bars. Each 100 g bar exhibited a thickness of 12 mm. As it was not possible to remove any air bubbles entrapped by tapping the moulds, the paste was pressed firmly into the mould to ensure that a consistent and homogeneous bar was prepared. The roll-pinned samples were moulded by placing a mass of paste between 4 guides. The paste was then roll-pinned evenly between the guides until a flat surface was obtained.

The following pilot plant trials were conducted as part of the experimental approach (Table 3):

**Table 3.**

| **Exp No** | **Exp Name** | **Run Order** | **FAT CONTENT % (w/w)** | **PARTICLE SIZE (µm)** | **MIXING TIME (s)** | **MIXING SPEED** | **EMULSIFIER added (Yes/No)** |
|---|---|---|---|---|---|---|---|
| 1 | N1 | 5 | 29.1 | 30 | 30 | 2 | No |
| 2 | N2 | 10 | 31.1 | 30 | 30 | 2 | Yes |
| 3 | N3 | 16 | 29.1 | 50 | 30 | 2 | Yes |
| 4 | N4 | 9 | 31.1 | 50 | 30 | 2 | No |
| 5 | N5 | 2 | 29.1 | 30 | 90 | 2 | Yes |
| 6 | N6 | 17 | 31.1 | 30 | 90 | 2 | No |
| 7 | N7 | 11 | 29.1 | 50 | 90 | 2 | No |
| 8 | N8 | 19 | 31.1 | 50 | 90 | 2 | Yes |
| 9 | N9 | 12 | 29.1 | 30 | 30 | 3 | Yes |
| 10 | N10 | 15 | 31.1 | 30 | 30 | 3 | No |
| 11 | N11 | 8 | 29.1 | 50 | 30 | 3 | No |
| 12 | N12 | 7 | 31.1 | 50 | 30 | 3 | No |
| 13 | N13 | 13 | 29.1 | 30 | 90 | 3 | No |
| 14 | N14 | 4 | 31.1 | 30 | 90 | 3 | Yes |
| 15 | N15 | 18 | 29.1 | 50 | 90 | 3 | Yes |
| 16 | N16 | 3 | 31.1 | 50 | 90 | 3 | No |
| 17 | N17 | 1 | 30.1 | 40 | 45 | 2 | No |
| 18 | N18 | 14 | 30.1 | 40 | 45 | 2 | No |
| 19 | N19 | 6 | 30.1 | 40 | 45 | 2 | No |

### Analysis of the Temperature-tolerant chocolate

### Physical Testing

Evaluation of the hardness of the chocolate samples was conducted using a TA. XT. Plus Texture Analyser (Stable Micro Systems Ltd., Godalming, Surrey, UK.) as describe below The texture analyser was equipped with a 12.8mm cylindrical probe and programmed to penetrate the sample to a depth of 3 mm at a speed of 0.5 mm / sec. In order to attain thermal equilibrium, the samples were incubated in a 40 °C oven for 3 hours prior to analysis.

For the roll-pinned samples, a total of 10 measurements were conducted per sample. The mean hardness and standard deviation were determined for each sample. For the selected hand-moulded samples, measurements were carried out on 5 bars at two locations on each bar to give a total of 10 measurements per sample. The mean hardness and standard deviation were determined for each bar.

Moisture contents of the final unconched pastes were carried out by the Karl Fischer method using methanol: formamide and chloroform in the ratio (3:2:1) as the extracting solvent.

Water activity measurements of the unconched paste samples were conducted at 25 °C.

### Micro structural Analysis

Two key approaches to the micro-structural analysis were taken: scanning electron microscopy and light microscopy:

### Scanning Electron Microscopy (SEM)

Small pieces (2-3 mm in size) of each sample were cut. They were taken from fractured surfaces and immersed in dried Multipar G (Multisol Ltd., Nantwich, UK) for a period of 72 hours. The resulting material was then filtered and air dried (in oven at 60°C for a couple of minutes). Material was mounted onto an SEM stub using adhesive carbon tabs and subsequently gold coated. Some samples, after gold coating, showed artefacts of horizontal streaking resulting from residual charge on the sample, but given the insulating and highly porous nature of the sample it was decided to accept some degree of charging to avoid the need to lay down a thicker gold layer. Regions of material indicative of volumes of residual structure were then investigated using secondary electron imaging in the high vacuum mode and a low beam energy of 5-10 keV.

### Light Microscopy

Samples were embedded in resin (following a substitution/dehydration method used for chocolate). The resin blocks were then thin sectioned using an ultra microtome (2 micron sections were achieved using the diamond blade). The sections were post stained by an osmification process, using osmium tetroxide, in order to reveal the protein in the matrix. Finally they were mounted using translucid super glue, and examined by compound light microscopy (Zeiss imager zl). The samples were taken at various magnifications from x5 to x63 (oil immersion lens). For each sample, two areas of the chocolate were imaged.

### Results

### Physical Testing

Table 4 shows the hardness values measured. For any given sample, the roll pin method was found to give more reproducible hardness data than the corresponding hand moulded units. The roll-pinned samples were therefore analysed in order to provide statistically robust data with respect to data trending (Table 4).

**Table 4. A summary of the roll-pin data**

| **Sample Details / Experiment No.** | **Hardness at 40 °C (g)** | **Std. Dev.** | **Moisture Content (% w/w)** | **Water activity, a_{w}** |
|---|---|---|---|---|
| low fat low psd 30 sec speed 2 (N1) | 6066.00 | 1155.02 | | |
| high fat low psd 30 sec speed 2 (N2) | 4021.46 | 411.06 | 1.19 | 0.244 |
| high fat low psd 30 sec speed 2 + emu (N2+emu) | 5296.2 | 650.07 | | |
| low fat high psd 30sec speed 2 (N3) | 1650.79 | 285.83 | | |
| low fat high psd 30sec speed 2 + emu(N3+emu) | 349.7 | 87.76 | | |
| high fat high psd 30sec speed 2 (N4) | 1108.32 | 125.77 | | |
| low fat low psd 90sec speed 2 (N5) | 5088.65 | 582.93 | 1.18 | 0.250 |
| low fat low psd 90sec speed 2 + emu(N5+emu) | 4407.5 | 449.96 | | |
| high fat low psd 90sec speed 2 (N6) | 3290.72 | 438.59 | | |
| low fat high psd 90sec speed 2 (N7) | 1501.63 | 154.06 | | |
| high fat high psd 90sec speed 2 (N8) | 423.24 | 39.12 | | |
| low fat low psd 30sec speed 3 (N9) | 5139.63 | 697.54 | | |
| low fat low psd 30sec speed 3 + emu (N9+emu) | 4393.8 | 347.25 | | |
| high fat low psd 30sec speed 3 (N10) | 2152.08 | 265.84 | 1.17 | 0.252 |
| low fat high psd 30sec speed 3 (N11) | 2152.04 | 319.68 | | |
| high fat high psd 30sec speed 3 (N12) | 324.78 | 43.70 | | |
| low fat low psd 90sec speed3 (N13) | 3551.64 | 468.36 | 1.25 | 0.249 |
| high fat low psd 90sec speed 3 (N14) | 1606.88 | 165.63 | | |
| low fat high psd 90sec speed 3 (N15) | 788.08 | 124.51 | | |
| high fat high psd 90sec speed 3 (N16) | 628.91 | 48.44 | | |
| N17 | 3704.69 | 455.24 | | |
| N18 | 2141.01 | 264.03 | 1.21 | 0.258 |
| N19 | 1921.92 | 458.69 | 1.17 | 0.255 |

Hand-moulded units of experiments N5, N6, N11, N16, N17 and N18 were also analysed to determine whether the performance benchmark (of 2000 g) had been attained (Table 5 below). Experimental error notwithstanding, three of the samples analysed exceeded the benchmark further highlighting the potential of this technology.

Emu = emulsifier.

**Table 5. Selected Hand Moulded Texture Data**

| **Sample Details / Experiment No.** | **Hardness at 40 °C (g)** | **Std. Dev. (g)** |
|---|---|---|
| Standard (N17) | 2691.3 | 727.22 |
| high fat low psd 90sec speed 2 (N6) | 2442.6 | 509.95 |
| low fat low psd 90sec speed 2 (N5) | 2210.7 | 749.03 |
| Standard (N18) | 1580.7 | 412.53 |
| low fat High psd 30sec speed 3 (N11) | 1396.8 | 294.46 |
| High fat low psd 90sec speed 3 (N14) | 1176.5 | 335.54 |
| High Fat High psd 90sec speed 3 (N16) | 677.1 | 101.60 |

### Micro structural Analysis

### Light Microscopy

Light microscope showed clear and reproducible differences between the microstructure of the B2 unconched paste and B1 paste. The unconched B2 equivalent paste is sugar-continuous and fat-discontinuous with the proteins being intimately linked to the dispersed sugars. In the case of the first, B1 equivalent paste; the sugar particles are larger and more discretely dispersed throughout a fat continuous matrix.

For example, the image for B1 of Experiment N18 shows a predominantly fat continuous system with a broad range of dispersed particles, whilst the image of B2 of Experiment N18 demonstrates the high connectivity between the sugar particles and near exclusion of the fat phase. Relative to the figure of the B1 paste, the fat phase of B2 is discontinuous by comparison. The proteins are also more evenly dispersed in the B2 paste suggesting that they are contributing to the microstructure and therefore potentially the functional properties. There was however some heterogeneity in the unconched paste. In two images taken of the same sample of unconched paste from experiment N15. The first image is similar to the previous B2 sections presented earlier with a high concentration of sugar particles that appear to be intimately linked. The second image, however, is more similar to the microstructure of the B1 paste where the fat is the continuous phase with a dispersion of broadly sized sugar particles and proteins.

Variations in the fat discontinuous system were observed between samples, Imaging of N2 demonstrated an exceptionally broad particle size distribution embedded within a fat continuous matrix. The level of connectivity between the sugar particles appears to be lower than in the paste images. Two reasons may account for this: there is more fat present (31 % cf 29-30% w/w) giving a darker background grey and secondly, the size of the particles are very small and intimately linked to the proteins.

Images of samples with and without emulsifier were also taken, for example Experiment N2. In N2 there was an intimate connection between the dispersed sugar particles and the blue staining of the proteins and both images indicate a sugar continuous network and fat-continuous matrix.

### SCANNING ELECTRON MICROSCOPY

Scanning electron microscopy (SEM) was conducted on the fat extracted material. The ability to analyse fat-extracted material immediately separates the microstructure of unconched paste from conventional chocolate. Unlike chocolate which disperses to form a suspension in the presence of Multipar G (Multisol Ltd., Nantwich, UK), unconched paste retains a high level of structure that enables it to be analysed for its microstructure. SEM analysis provided further detail in terms of the physical bridging that occurs between particles. This was exemplified by a 10,000x image of unconched paste (B2) from Experiment N18 where the platelets like sugar particles were observed merging / bridging in the image.

### Overall Conclusions

Example 1 shows temperature tolerant chocolate can be prepared using unconched chocolate ingredients and conched chocolate. Based on these data, a combination of low particle size, low fat content, low mixing time and low mixing speed can deliver optimal temperature tolerance.

### Example 2

### Preparation of Temperature-tolerant chocolate followed by re-refining

Pin Milled Crumb was mixed with cocoa butter added sequentially over a period of 20 seconds in a 12 litre Hobart A200N bench mixer with bowl and aluminium open paddle (B Flat beater) at speed setting 2 for a total duration of 150 seconds (inclusive of cocoa butter addition time) to produce unconched paste.

Two batches of unconched paste were prepared, 29.1 % and 31.1% total fat measured by method based on AOAC Official Method 963.15 - Fat in Cacao Products - Soxhlet Extraction Method 1973 (AOAC Official Method 963.15 Fat in Cacao Products. AOAC Official Methods of Analysis 31.4.02 (1995), Chapter 31, p.10) with sample digested by 8N hydrochloric acid (2 parts concentrated HCl AR + 1 part distilled water), filtered, washed with distilled water and residual fat extracted by Soxhlet apparatus.

The 29.1% total fat unconched paste was refined using a Buhler 3 Roll Refiner SDY 200 at settings of 12:45 back left and right (1^{st} entry roll), 12:30 front left and right (3^{rd} exit roll). The resulting 'refiner flake' was analysed using a Malvern Mastersizer 2000 to determine particle size distribution and corresponded to an approximately 30 micron d84 particle size distribution.

The 31.1% total fat unconched paste was refined using a Buhler 3 Roll Refiner SDY 200 at settings of 12:55 back left and right (1^{st} entry roll), 12:40 front left and right (3^{rd} exit roll). The resulting 'refiner flake' was analysed using a Malvern Mastersizer 2000 to determine particle size distribution and corresponded to a approximately 50 micron d84 particle size distribution.

Handmade tablets were prepared of the individual refiner flakes using top and bottom punches and a corresponding cylindrical die of 18mm diameter from a Manesty rotary tabletting machine (see Figure 3).

The method used was for the 'top' punch to be placed vertically as indicated in Figure 3, with the open face of the punch facing up, and the cylindrical die placed around the narrow section creating a cavity. 2 grams of refiner flake was placed into the cavity and the 'bottom' punch was placed vertically on the top of the cavity with the long narrow section pointing vertically downwards, sealing the powder between the punches within the die.

Light pressure was applied by hand to the vertically up facing end of the 'bottom' punch to marginally compact the powder whilst gripping the top punch and die with one hand to support the combination.

The combined system was raised approximately 150mm from a solid metal table surface and forced down by the pressure of the hand placed on the vertically up facing end of the bottom punch in one movement so the force of the downward motion compressed the powder held in the sealed cavity when the 'top' punch met the solid metal surface and ceased moving. This process was repeated another 4 times using an approximately equivalent force (not quantified, qualitatively controlled by operator).

The system was then inverted, the 'top punch' removed slowly and the bottom punch was pushed vertically up through the die until the compressed powder was revealed and the tablet removed by hand.

Handmade tablets of the 29.1% and 31.1% total fat refiner flakes were prepared by the method described above and were submitted for texture analysis to determine relative hardness (method as described above, 3hours conditioning at 40°C prior to texture analysis using Stable Micro Systems TA.XT Plus texture analyser).

It was observed that refiner flake tablets prepared with 31.1% fat show lower resistance to penetration force in contrast to the 29.1% fat refiner flake samples based on the lower average 1^{st} peak force determined by texture analysis.

**Table 1: Penetration results of handmade tablets (2g, 25mm diameter).**

| | 1st Peak | | |
|---|---|---|---|
| | Force | Product Height | Product Weight |
| | g | mm | g |
| 31.1% REFINER FLAKE | | | |
| Average (of ten samples): | 457.4 | 6.7 | 2.01 |
| S.D. | 130.4 | 0.3 | 0.02 |
| Coef. Of Variation | 28.5 | 4.4 | |
| | | | |

| 29.1% Refiner flake | | | |
|---|---|---|---|
| Average (of ten samples): | 887.0 | 6.6 | 2.00 |
| S.D. | 199.5 | 0.2 | 0.04 |
| Coef. Of Variation | 22.5 | 3.1 | |

### Automatically prepared tablets - affect of process of intermediate on heat resistance

The 29.1% total fat refiner flake was automatically tabletted using a RIVA Mini Press MII bench top automatic tabletter with an 11mm diameter cylindrical die at speed of 30 presses/min for 20 seconds. Automatic tabletting could be continued for much longer for the 29.1% total fat refiner flake without picking than the 31.1% total fat refiner flake.

The 29.1% total fat refiner flake samples were mixed with blends of conched chocolate in ratios (refiner flake:choc) 95:5, 90:10 and 80:20 in the same method of mixing as described above for the mixing of refiner flake and cocoa butter.

The blends of 29.1% total fat refiner flake and conched chocolate were automatically tabletted without re-refining using the RIVA Mini Press MII to the same operating conditions for 20 seconds.

The automatically prepared samples were submitted for texture analysis as described above to determine relative hardness.

Figure 1 shows Penetration force in grams of tablets prepared from 29.1% refiner flake only, 29.1% refiner flake + conched chocolate blended in 95:5, 90:10 and 80:20 ratios.

As can clearly be seen, the penetration force reduces as greater levels of conched chocolate are added into the blend mixes.

31.1% refiner flake was mixed with conched chocolate (83:17 ratio) in the same method of mixing as described above for the mixing of refiner flake and cocoa butter and re-refined in the same method of refining as described above however with settings of 12:40 back left and right (1^{st} entry roll), 12:20 front left and right (3^{rd} exit roll), 12:50 back left and right (1^{st} entry roll), 12:30 front left and right (3^{rd} exit roll) and 13:00 back left and right (1^{st} entry roll), 12:40 front left and right (3^{rd} exit roll) to give three different particle size distributions.

In contrast to the 31.1% total fat refiner flake which had not been mixed with conched chocolate, each of these samples could be tabletted.

Figure 2 shows Penetration force in grams of tablets (method as defined above with 40°C, 3 hours conditioning prior to analysis) prepared from 31.1% refiner flakes blended with conched chocolate (83:17 ratio) and re-refined to low, medium, high particle size distribution.

As can clearly be seen by comparing Figure 1 and Figure 2, the overall penetration force for samples made with 31.1% fat content refiner flake, blended with conched chocolate and re-refined are greater than the corresponding samples made with 29.1% fat content refiner flake and blended with conched chocolate to a similar ratio.

This indicates not only can re-refining support the suitability for manipulating the intermediate into a suitable form for the tabletting process; it also confers greater temperature tolerance when compared to the same recipe, or recipes which are known to deliver less temperature tolerance vs. a non re-refined product.

## Claims

1. A process for preparing a chocolate product comprising:
(a) providing unconched chocolate ingredients; and
(b) mixing said unconched chocolate ingredients with conched chocolate to form a chocolate product; and
optionally moulding said chocolate product; and
**characterised in that** the unconched chocolate ingredients comprise fat and one or more sweeteners and one or more components selected from milk and cocoa liquor; and **in that** the conched chocolate is added in the range of 10% to 35% (w/w) of the unconched chocolate ingredients and conched chocolate mixture; and **in that** the method comprises preparing a chocolate product having an average particle size of less than 80µm and having a percentage total fat in the range of 20% to 35%.

2. A process for preparing a chocolate product, according to claim 1, comprising:
(a) providing unconched chocolate ingredients;
(b) refining said unconched chocolate ingredients, and
(c) mixing said unconched chocolate ingredients from (b) with conched chocolate to form a chocolate product, wherein the conched chocolate is added in the range of 10% to 35% (w/w) of the unconched chocolate ingredients and conched chocolate mixture; and
optionally moulding said chocolate product.

3. A process according to claim 1 or claim 2, comprising:
(a) preparing an unconched paste by a process comprising the steps of:
(i) providing starting ingredients;
(ii) pasting said starting ingredients with a fat to form a paste;
(iii) refining said paste;
(b) mixing said unconched paste with conched chocolate to form a chocolate product; wherein the conched chocolate is added in the range of 10% to 35% (w/w) of the unconched chocolate ingredients and conched chocolate mixture, and
optionally moulding said chocolate product.

4. A process according to any one of claims 1 to 3 further comprising refining the chocolate product.

5. A process according to any preceding claim, comprising:
(a) preparing an unconched paste by a process comprising the steps of:
(i) providing starting ingredients, for example chocolate crumb;
(ii) pasting said starting ingredients with a fat to form a paste;
(iii) refining said paste, to a particle size of less than 80µm;
(b) mixing said unconched paste with conched chocolate to form a chocolate product;
(c) refining said chocolate product, and
optionally moulding said chocolate product.

6. A process according to any one of claims 3 to 5 wherein the starting ingredients comprise chocolate crumb.

7. A process according to any one of claims 3 to 6 wherein less than 50% (w/w) of the sugar is in the amorphous form.

8. A process according to claim 7 wherein the sugar comprises predominantly crystalline sucrose.

9. A process according to claim 7 or 8 wherein the sugar comprises a mixture of sucrose and lactose wherein the sucrose is predominantly crystalline and the lactose is predominantly amorphous.

10. A process according to any one of the preceding claims wherein the conched chocolate is added in the range 20% to 30% (w/w) of the chocolate ingredients and conched chocolate mixture.

11. A process according to any one of the preceding claims wherein the fat is selected from cocoa butter, butterfat, a cocoa butter equivalent, a cocoa butter substitute, a vegetable fat, a wholly non-metabolisable fat or any combination thereof.

12. A process according to any one of the preceding claims wherein the fat content of the chocolate product is at least 22%.

13. A process according to claim 9 wherein the fat content of the chocolate product is in the range 25% to 35%.

14. A chocolate product comprising a mixture of: unconched chocolate ingredients and a conched chocolate; **characterised in that** the unconched chocolate ingredients comprise fat and one or more sweeteners and one or more components selected from milk and cocoa liquor; and **in that** the conched chocolate is present in the range of 10% to 35% (w/w) of the chocolate product; and **in that** the chocolate product has an average particle size of less than 80µm and a percentage total fat in the range of 20% to 35%.

15. A chocolate product according to claim 13 or 14 wherein the conched chocolate is present in the range 20% to 30% (w/w) of the chocolate product and/or wherein the fat content is at least 22%.

16. A chocolate product according to any of claims 13 to 15 wherein the fat content is in the range 25% to 35% (w/w).

17. A chocolate product according to any of claims 13 to 15 wherein the chocolate product has a hardness at 40°C of greater than 200g when measured using a texture tolerance method.

18. A chocolate product according to claim 17 wherein the chocolate product has a hardness at 40°C of greater than 1000g when measured using a texture tolerance method.

## Patentansprüche

1. Verfahren zur Zubereitung eines Schokoladenprodukts, umfassend:
(a) Bereitstellen von unconchierten Schokoladenbestandteilen; und
(b) Mischen der unconchierten Schokoladenbestandteile mit conchierter Schokolade, um ein Schokoladenprodukt zu bilden; und
gegebenenfalls Formen des Schokoladenprodukts; und
**dadurch gekennzeichnet, dass** die unconchierten Schokoladenbestandteile Fett und ein oder mehrere Süßungsmittel und eine oder mehrere Komponenten, ausgewählt aus Milch und Kakaomasse, umfassen; und dass die conchierte Schokolade im Bereich von 10 Gew.-% bis 35 Gew.-% der unconchierten Schokoladenbestandteile und der conchierten Schokoladenmischung zugegeben wird; und dass das Verfahren die Zubereitung eines Schokoladenprodukts mit einer durchschnittlichen Partikelgröße von weniger als 80 µm und mit einem Prozentsatz des Gesamtfetts im Bereich von 20 % bis 35 % umfasst.

2. Verfahren zur Zubereitung eines Schokoladenprodukts nach Anspruch 1, umfassend:
(a) Bereitstellen von unconchierten Schokoladenbestandteilen;
(b) Verfeinern der unconchierten Schokoladenbestandteile, und
(c) Mischen der unconchierten Schokoladenbestandteile aus (b) mit conchierter Schokolade, um ein Schokoladenprodukt zu bilden, wobei die conchierte Schokolade im Bereich von 10 Gew.-% bis 35 Gew.-% der unconchierten Schokoladenbestandteile und der conchierten Schokoladenmischung zugegeben wird; und
gegebenenfalls Formen des Schokoladenprodukts.

3. Verfahren nach Anspruch 1 oder Anspruch 2, umfassend:
(a) Zubereiten einer unconchierten Paste durch ein Verfahren, das die folgenden Schritte umfasst:
(i) Bereitstellen von Ausgangsbestandteilen;
(ii) Einfügen eines Fetts in die Ausgangsbestandteile, um eine Paste zu bilden;
(iii) Verfeinern der Paste;
(b) Mischen der unconchierten Schokoladenbestandteile mit conchierter Schokolade, um ein Schokoladenprodukt zu bilden; wobei die conchierte Schokolade im Bereich von 10 Gew.-% bis 35 Gew.-% der unconchierten Schokoladenbestandteile und der conchierten Schokoladenmischung zugegeben wird, und gegebenenfalls Formen des Schokoladenprodukts.

4. Verfahren nach einem der Ansprüche 1 bis 3, weiter umfassend das Verfeinern des Schokoladenprodukts.

5. Verfahren nach einem der vorstehenden Ansprüche, umfassend:
(a) Zubereiten einer unconchierten Paste durch ein Verfahren, das die folgenden Schritte umfasst:
(i) Bereitstellen von Ausgangsbestandteilen, zum Beispiel Schokolade-Crumb;
(ii) Einfügen eines Fetts in die Ausgangsbestandteile, um eine Paste zu bilden;
(iii) Verfeinern der Paste auf eine Partikelgröße von weniger als 80 µm;
(b) Mischen der unconchierten Paste mit conchierter Schokolade, um ein Schokoladenprodukt zu bilden;
(c) Verfeinern des Schokoladenprodukts, und
gegebenenfalls Formen des Schokoladenprodukts.

6. Verfahren nach einem der Ansprüche 3 bis 5, wobei die Ausgangsbestandteile Schokolade-Crumb umfassen.

7. Verfahren nach einem der Ansprüche 3 bis 6, wobei weniger als 50 Gew.-% des Zuckers in amorpher Form vorliegen.

8. Verfahren nach Anspruch 7, wobei der Zucker überwiegend kristalline Saccharose umfasst.

9. Verfahren nach Anspruch 7 oder 8, wobei der Zucker ein Gemisch aus Saccharose und Lactose umfasst, wobei die Saccharose überwiegend kristallin und die Lactose überwiegend amorph ist.

10. Verfahren nach einem der vorstehenden Ansprüche, wobei die conchierte Schokolade im Bereich von 20 Gew.-% bis 30 Gew.-% der Schokoladenbestandteile und der conchierten Schokoladenmischung zugegeben wird.

11. Verfahren nach einem der vorstehenden Ansprüche, wobei das Fett ausgewählt ist aus Kakaobutter, Butterfett, einem Kakaobutteräquivalent, einem Kakaobutterersatz, einem Pflanzenfett, einem vollständig nicht metabolisierbaren Fett oder einer Kombination davon.

12. Verfahren nach einem der vorstehenden Ansprüche, wobei der Fettgehalt des Schokoladenprodukts mindestens 22 % beträgt.

13. Verfahren nach Anspruch 9, wobei der Fettgehalt des Schokoladenprodukts im Bereich von 25 % bis 35 % liegt.

14. Schokoladenprodukt, umfassend eine Mischung von: unconchierten Schokoladenbestandteilen und einer conchierten Schokolade; **dadurch gekennzeichnet, dass** die unconchierten Schokoladenbestandteile Fett und ein oder mehrere Süßungsmittel und eine oder mehrere Komponenten, ausgewählt aus Milch und Kakaomasse, umfassen; und dass die conchierte Schokolade im Bereich von 10 Gew.-% bis 35 Gew.-% des Schokoladenprodukts vorhanden ist; und dass das Schokoladenprodukt eine durchschnittliche Partikelgröße von weniger als 80 µm und einen Anteil an Gesamtfett im Bereich von 20 % bis 35 % aufweist.

15. Schokoladenprodukt nach Anspruch 13 oder 14, wobei die conchierte Schokolade im Bereich von 20 Gew.-% bis 30 Gew.-% des Schokoladenprodukts vorhanden ist und/oder wobei der Fettgehalt mindestens 22 % beträgt.

16. Schokoladenprodukt nach einem der Ansprüche 13 bis 15, wobei der Fettgehalt im Bereich von 25 Gew.-% bis 35 Gew.-% liegt.

17. Schokoladenprodukt nach einem der Ansprüche 13 bis 15, wobei das Schokoladenprodukt eine Härte bei 40 °C von mehr als 200 g aufweist, wenn es unter Verwendung eines Texturtoleranzverfahrens gemessen wird.

18. Schokoladenprodukt nach Anspruch 17, wobei das Schokoladenprodukt eine Härte bei 40 °C von mehr als 1000 g aufweist, wenn es unter Verwendung eines Texturtoleranzverfahrens gemessen wird.

## Revendications

1. Processus pour la préparation d'un produit de chocolat, comprenant :
(a) la fourniture d'ingrédients de chocolat non conchés ; et
(b) le mélange desdits ingrédients de chocolat non conchés avec du chocolat conché pour former un produit de chocolat ; et
éventuellement, le moulage dudit produit de chocolat ; et
**caractérisé en ce que** les ingrédients de chocolat non conchés comprennent de la matière grasse et un ou plusieurs édulcorants et un ou plusieurs composants choisis parmi du lait et de la liqueur de cacao ; et **en ce que** le chocolat conché est ajouté dans la plage de 10 % à 35 % (en poids) du mélange d'ingrédients de chocolat non conchés et de chocolat conché ; et **en ce que** le procédé comprend la préparation d'un produit de chocolat ayant une taille moyenne de particules inférieure à 80 µm et ayant un pourcentage de matières grasses totales dans la plage de 20 % à 35 %.

2. Processus pour la préparation d'un produit de chocolat, selon la revendication 1, comprenant :
(a) la fourniture d'ingrédients de chocolat non conchés ;
(b) le raffinage desdits ingrédients de chocolat non conchés, et
(c) le mélange desdits ingrédients de chocolat non conchés provenant de (b) avec du chocolat conché pour former un produit de chocolat, dans lequel le chocolat conché est ajouté dans la plage de 10 % à 35 % (en poids) du mélange d'ingrédients de chocolat non conchés et de chocolat conché ; et
éventuellement, le moulage dudit produit de chocolat.

3. Processus selon la revendication 1 ou la revendication 2, comprenant :
(a) la préparation d'une pâte non conchée par un processus comprenant les étapes consistant à :
(i) fournir des ingrédients de départ ;
(ii) transformer en pâte lesdits ingrédients de départ avec une matière grasse pour former une pâte ;
(iii) raffiner ladite pâte ;
(b) le mélange de ladite pâte non conchée avec du chocolat conché pour former un produit de chocolat ; dans lequel le chocolat conché est ajouté dans la plage de 10 % à 35 % (en poids) du mélange d'ingrédients de chocolat non conchés et de chocolat conché, et
éventuellement, le moulage dudit produit de chocolat.

4. Processus selon l'une quelconque des revendications 1 à 3, comprenant en outre le raffinage du produit de chocolat.

5. Processus selon l'une quelconque revendication précédente, comprenant :
(a) la préparation d'une pâte non conchée par un processus comprenant les étapes consistant à :
(i) fournir des ingrédients de départ, par exemple, des brisures de chocolat ;
(ii) transformer en pâte lesdits ingrédients de départ avec une matière grasse pour former une pâte ;
(iii) raffiner ladite pâte, jusqu'à une taille de particules inférieure à 80 µm ;
(b) le mélange de ladite pâte non conchée avec du chocolat conché pour former un produit de chocolat ;
(c) le raffinage dudit produit de chocolat, et
éventuellement, le moulage dudit produit de chocolat.

6. Processus selon l'une quelconque des revendications 3 à 5, dans lequel les ingrédients de départ comprennent des brisures de chocolat.

7. Processus selon l'une quelconque des revendications 3 à 6, dans lequel moins de 50 % (en poids) du sucre est sous la forme amorphe.

8. Processus selon la revendication 7, dans lequel le sucre comprend principalement du saccharose cristallin.

9. Processus selon la revendication 7 ou 8, dans lequel le sucre comprend un mélange de saccharose et de lactose, dans lequel le saccharose est principalement cristallin et le lactose est principalement amorphe.

10. Processus selon l'une quelconque des revendications précédentes, dans lequel le chocolat conché est ajouté dans la plage de 20 % à 30 % (en poids) du mélange d'ingrédients de chocolat et de chocolat conché.

11. Processus selon l'une quelconque des revendications précédentes, dans lequel la matière grasse est choisie parmi du beurre de cacao, de la matière grasse de beurre, un équivalent de beurre de cacao, un substitut de beurre de cacao, une matière grasse végétale, une matière grasse entièrement non métabolisable ou n'importe quelle combinaison de ceux-ci.

12. Processus selon l'une quelconque des revendications précédentes, dans lequel la teneur en matières grasses du produit de chocolat est d'au moins 22 %.

13. Processus selon la revendication 9, dans lequel la teneur en matières grasses du produit de chocolat est dans la plage de 25 % à 35 %.

14. Produit de chocolat comprenant un mélange de : des ingrédients de chocolat non conchés et un chocolat conché ; **caractérisé en ce que** les ingrédients de chocolat non conchés comprennent de la matière grasse et un ou plusieurs édulcorants et un ou plusieurs composants choisis parmi du lait et de la liqueur de cacao ; et **en ce que** le chocolat conché est présent dans la plage de 10 % à 35 % (en poids) du produit de chocolat ; et **en ce que** le produit de chocolat a une taille moyenne de particules inférieure à 80 µm et un pourcentage de matières grasses totales dans la plage de 20 % à 35 %.

15. Produit de chocolat selon la revendication 13 ou 14, dans lequel le chocolat conché est présent dans la plage de 20 % à 30 % (en poids) du produit de chocolat et/ou dans lequel la teneur en matières grasses est d'au moins 22 %.

16. Produit de chocolat selon l'une quelconque des revendications 13 à 15, dans lequel la teneur en matières grasses est dans la plage de 25 % à 35 % (en poids).

17. Produit de chocolat selon l'une quelconque des revendications 13 à 15, dans lequel le produit de chocolat a une dureté à 40 °C supérieure à 200 g lorsqu'on mesure en utilisant un procédé de tolérance de texture.

18. Produit de chocolat selon la revendication 17, dans lequel le produit de chocolat a une dureté à 40 °C supérieure à 1000 g lorsqu'on mesure en utilisant un procédé de tolérance de texture.
